# FASCICULE DE BREVET EUROPEEN

(11) **EP 2 990 678 B1**
(45) Date de publication et mention de la délivrance du brevet: **01.02.2017**
(21) Numéro de dépôt: 15175488.4
(22) Date de dépôt: 06.07.2015
(51) Int. Cl.: F16D 13/38, F16D 13/52, F16D 25/0638, F16B 21/18, F16D 1/116, F16D 21/06

(54) **DISPOSITIF D'EMBRAYAGE POUR UN VÉHICULE AUTOMOBILE**
KUPPLUNGSVORRICHTUNG FÜR KRAFTFAHRZEUG
CLUTCH DEVICE FOR A MOTOR VEHICLE

(30) Priorité: 01.08.2014 FR 1457498
(43) Date de publication de la demande: 02.03.2016
(73) Titulaire: Valeo Embrayages, 80009 Amiens Cedex 2 (FR)
(72) Inventeur: ARHAB, Rabah, 95350 ST BRICE SOUS FORET (FR); CAUMARTIN, Laurent, 80600 BEAUQUESNE (FR); RIBOT, Herve, 80200 PERONNE (FR)
(74) Mandataire: Cardon, Nicolas

(56) Documents cités:
- DE-A1-102007 027 117
- DE-A1-102011 006 027
- US-A- 2 886 355

## Description

La présente invention concerne un dispositif d'embrayage pour un véhicule automobile.

La demande de brevet DE 10 2011 006 027 divulgue un dispositif d'embrayage pour un véhicule automobile, comprenant des moyens d'entrée de couple destinés à être couplés à un vilebrequin, un premier arbre de sortie de couple, un second arbre de sortie de couple, un premier mécanisme d'embrayage apte à coupler ou découpler les moyens d'entrée de couple et le premier arbre de sortie de couple, et un second mécanisme d'embrayage apte à coupler ou découpler les moyens d'entrée de couple et le second arbre de sortie de couple. Les premier et second mécanismes d'embrayage comportent respectivement des premiers et des seconds disques montés respectivement sur un premier et un second supports externes appartenant aux moyens d'entrée de couple. Les premiers et seconds mécanismes d'embrayage comportent en outre respectivement des premiers et des seconds contre-disques montés respectivement sur un premier et un second supports internes couplés en rotation respectivement au premier et au second arbres de sortie de couple. Chaque support interne comporte un moyeu radialement interne monté autour de l'arbre de sortie de couple correspondant, ledit moyeu et ledit arbre de sortie de couple correspondant comportant des moyens de couplage en rotation complémentaires, tels par exemple que des cannelures complémentaires.

En outre, le moyeu du premier support interne est maintenu axialement en position à l'aide de deux anneaux élastiques de type circlips et d'une rondelle d'ajustement permettant de réduire le jeu de montage axial.

Le nombre d'éléments nécessaires à un tel montage est donc relativement important.

Par ailleurs, afin de réaliser le montage d'un tel dispositif d'embrayage sur une boîte de vitesses, c'est-à-dire afin de monter les moyeu des supports internes sur les arbres de sortie de couple correspondants (qui forment également les arbres d'entrée de la boîte de vitesses), il est nécessaire de démonter une partie du dispositif, en particulier les moyens d'entrée de couple, afin d'avoir accès aux anneaux élastiques.

Ceci est relativement fastidieux, couteux et peut être source d'erreur ou d'endommagement du dispositif lors de son montage sur la boîte de vitesses.

L'invention a notamment pour but d'apporter une solution simple, efficace et économique aux problèmes précités.

A cet effet, elle propose un dispositif d'embrayage pour un véhicule automobile, comprenant des moyens d'entrée de couple destinés à être couplés à un vilebrequin, un premier arbre de sortie de couple, un second arbre de sortie de couple, un premier mécanisme d'embrayage apte à coupler ou découpler les moyens d'entrée de couple et le premier arbre de sortie de couple, un second mécanisme d'embrayage apte à coupler ou découpler les moyens d'entrée de couple et le second arbre de sortie de couple, les premier et second mécanismes d'embrayage comportant respectivement des premiers et des seconds disques montés respectivement sur un premier et un second supports externes appartenant aux moyens d'entrée de couple, les premiers et seconds mécanismes d'embrayage comportant en outre respectivement des premiers et des seconds contre-disques montés respectivement sur un premier et un second supports internes couplés en rotation respectivement au premier et au second arbres de sortie de couple, le premier support interne et/ou le second support interne comportant un moyeu radialement interne monté autour de l'arbre de sortie de couple correspondant, ledit moyeu et ledit arbre de sortie de couple correspondant comportant des moyens de couplage en rotation complémentaires, tels par exemple que des cannelures complémentaires, et des moyens de positionnement axiaux dudit moyeu sur l'arbre de sortie de couple correspondant, caractérisé en ce que les moyens de positionnement axiaux comportent au moins une gorge ménagée dans l'arbre de sortie de couple correspondant, au moins une gorge ménagée dans ledit moyeu, et au moins un anneau élastique apte à être déformé entre une position déverrouillée dans laquelle ledit anneau élastique est logé dans la gorge de l'arbre de sortie de couple correspondant de façon à permettre le montage du moyeu autour dudit arbre de sortie correspondant, et une position verrouillée dans laquelle ledit anneau élastique est logé à la fois dans la gorge dudit arbre de sortie correspondant et dans la gorge dudit moyeu, de manière à immobiliser axialement le support interne correspondant sur l'arbre de sortie correspondant.

Le montage du moyeu sur l'arbre de sortie de couple correspondant ne nécessite ainsi plus qu'un seul anneau élastique, le jeu axial de montage étant déterminé par la tolérance dimensionnelle au niveau de la dimension axiale de l'anneau et des dimensions axiales des gorges correspondantes du moyeu et de l'arbre de sortie. Le coût et la complexité d'un tel dispositif d'embrayage sont donc réduits, par comparaison avec l'art antérieur.

Selon une caractéristique de l'invention, le moyeu comporte un chanfrein ou un congé au niveau de l'une des extrémités axiales de sa périphérie radialement interne, l'anneau élastique étant apte à être déplacé vers sa position déverrouillée lors du montage du moyeu autour de l'arbre de sortie correspondant, par appui dudit anneau élastique sur le chanfrein ou le congé du moyeu.

Ainsi, le montage du moyeu du support interne peut être réalisé aisément sur l'arbre de sortie de couple correspondant, l'anneau élastique venant se déformer puis s'engager ou se verrouiller dans les gorges précitées, sans intervention d'un opérateur et sans démontage d'une partie du dispositif, contrairement à l'art antérieur.

Par ailleurs, le moyeu correspondant comporte au moins un évidement s'étendant axialement, débouchant axialement dans la gorge dudit moyeu.

Un tel évidement permet de pouvoir contraindre et déverrouiller l'anneau élastique à l'aide d'un outil, de façon à pouvoir extraire le moyeu du support interne hors de l'arbre de sortie de couple. On notera cependant qu'un tel démontage n'intervient qu'exceptionnellement.

De préférence, les deux arbres de sortie de couple sont coaxiaux, le premier arbre de sortie de couple étant monté radialement à l'intérieur du second arbre de sortie de couple, le premier mécanisme d'embrayage étant situé radialement à l'extérieur du second mécanisme d'embrayage.

En outre, les premier et second mécanismes d'embrayage peuvent être des mécanismes d'embrayage humides, c'est-à-dire lubrifiés à l'aide d'un fluide, tel que de l'huile.

Dans ce cas, les moyens d'entrée de couple peuvent comporter un organe d'entrée de couple, couplé en rotation au premier support externe et délimitant avec celui-ci un volume interne dans lequel sont logés les premiers et seconds mécanismes d'embrayage et dans lequel un fluide est destiné à lubrifier et refroidir notamment lesdits mécanismes d'embrayage, les moyens d'entrée de couple comportant en outre un moyeu d'alimentation en fluide couplé en rotation aux supports externes, ledit moyeu d'alimentation entourant le second arbre de sortie de couple, le premier support interne étant situé axialement entre l'organe d'entrée de couple et le second support interne, le second support interne étant situé axialement entre le premier support interne et le moyeu d'alimentation.

Un premier palier peut alors être monté axialement entre l'organe d'entrée de couple et le premier support interne, un second palier étant monté axialement entre le premier support interne et le second support interne, un troisième palier étant monté axialement entre le second support interne et le moyeu d'alimentation, le moyeu d'alimentation étant fixe axialement par rapport au premier support externe, lui-même fixe axialement par rapport à l'organe d'entrée de couple.

Ces paliers sont par exemple des butées à aiguilles.

De plus, chaque mécanisme d'embrayage peut être associé à un piston apte à être actionné entre une position d'embrayage dans laquelle ledit piston plaque les disques sur les contre-disques associés du mécanisme d'embrayage correspondant, et une position de débrayage dans laquelle ledit piston libère les disques et les contre-disques du mécanisme d'embrayage correspondant.

Dans ce cas, chaque piston peut être associé à une chambre de pression et une chambre de contre-pression, chaque piston étant en outre soumis à un effort de rappel appliqué par un organe de rappel élastique, tel par exemple qu'une rondelle élastique, tendant à rappeler le piston vers sa position débrayée.

L'invention concerne également un véhicule automobile comportant au moins un dispositif du type précité.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une demi-vue en coupe d'un dispositif d'embrayage selon l'invention,
- la figure 2 est une vue de détail d'une partie de la figure 1,
- la figure 3 est une vue en perspective d'une partie du dispositif.

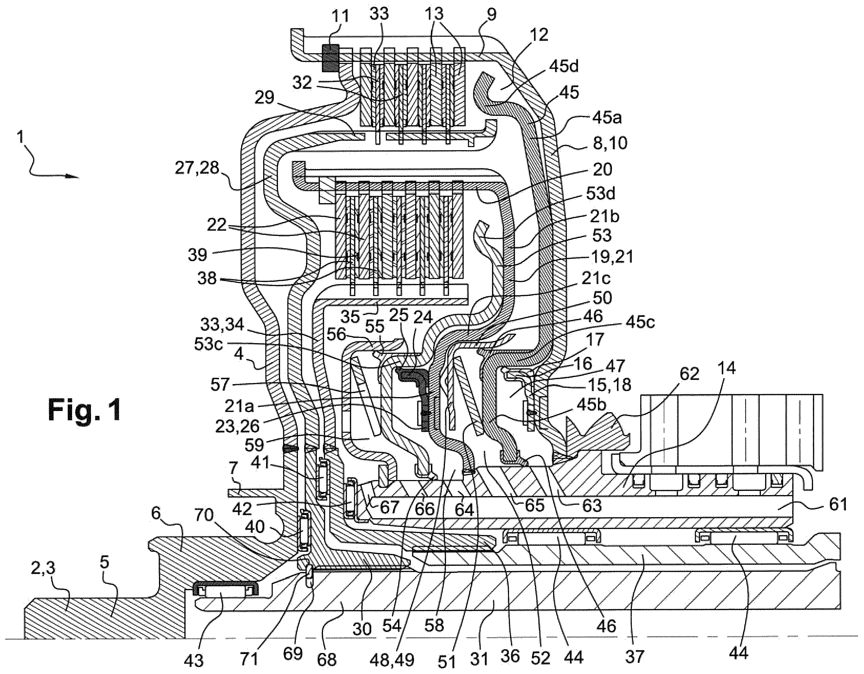

Un dispositif d'embrayage 1 selon une forme de réalisation de l'invention est illustré aux figures 1 à 3. Celui-ci comporte un organe d'entrée de couple 2 comprenant une partie avant 3 s'étendant axialement et destinée à être couplée à un dispositif d'amortissement, lui-même couplé à un vilebrequin d'un moteur à combustion interne d'un véhicule automobile, et une partie arrière 4 s'étendant radialement. La partie avant 3 comporte, d'avant en arrière, une première partie 5 cylindrique et une deuxième partie 6 cylindrique et de plus grand diamètre que la première partie 5. La partie arrière radiale 4 comporte un rebord cylindrique 7 s'étendant vers l'avant et présentant un diamètre plus grand que le diamètre de la deuxième partie cylindrique 6.

La première partie 5 sert au montage d'un roulement. La deuxième partie 6 est destinée à être couplée au dispositif d'amortissement, par exemple par l'intermédiaire de cannelures complémentaires. Le rebord cylindrique 7 est destiné à supporter un joint afin d'éviter que du fluide, tel que de l'huile, ne s'échappe du côté du moteur du véhicule.

La périphérie radialement externe de la partie arrière 4 de l'organe d'entrée de couple 2 est couplée en rotation à un premier support externe 8. Plus particulièrement, le premier support externe 8 comporte une partie avant 9 globalement cylindrique et une partie arrière annulaire 10 s'étendant radialement vers l'intérieur depuis la partie avant 9.

La périphérie radialement externe de l'organe d'entrée de couple 2 est couplée en rotation à la partie avant 9 et est maintenue axialement en position à l'aide d'un anneau élastique ou circlips 11. L'organe d'entrée de couple 2 et le premier support externe 8 délimitent un volume interne 12.

Des premiers disques 13 sont en outre montés sur la partie avant 9 du premier support externe 8, les premiers disques 13 étant espacés les uns des autres, logés dans le volume interne 12 précité et aptes à coulisser le long de ladite partie avant 9.

La périphérie interne de la partie arrière 10 du premier support externe 8 est fixée, par exemple par soudage, à un moyeu d'alimentation en fluide 14, par exemple en huile. Un premier support de joint 15 est en outre fixé, par exemple par soudage par point ou par rivetage, sur la face avant de la partie arrière 10 du premier support externe 8. Le premier support de joint 15 comporte une partie cylindrique avant 16, destinée à supporter un joint à lèvre 17, et une partie annulaire radiale arrière 18, fixée sur le premier support externe 8.

Le dispositif d'embrayage 1 comporte en outre un second support externe 19 comportant, comme précédemment, une partie avant cylindrique 20 et une partie arrière annulaire 21 s'étendant radialement et dont la périphérie radialement interne est fixée, par exemple par soudage, au moyeu d'alimentation 14. Plus particulièrement la partie arrière 21 comporte une zone radialement interne 21a et une zone radialement externe 21 b s'étendant radialement et décalées axialement l'une de l'autre. La zone radialement interne 21a est décalée vers l'avant par rapport à la zone radialement externe 21 b et est reliée à cette dernière par un épaulement cylindrique 21 c.

La partie arrière 21 du second support externe 19 est monté en avant de la partie arrière 10 du premier support externe 8, le second support externe 19 étant logé à l'intérieur du volume interne 12. Des seconds disques 22 sont en outre montés sur la partie avant 20 du second support externe 19, les seconds disques 22 étant espacés les uns des autres et sont aptes à coulisser le long de ladite partie avant 20.

Un second support de joint 23 est en outre fixé, par exemple par soudage par point ou par rivetage, sur la face avant de la zone 21 a de la partie arrière 21. Le second support de joint 23 comporte une partie cylindrique avant 24, destinée à supporter un joint à lèvre 25, et une partie annulaire radiale arrière 26, fixée sur le second support externe 19.

Le dispositif d'embrayage 1 comporte de plus un premier support interne 27 comprenant une partie avant 28 annulaire s'étendant radialement et une partie arrière cylindrique 29 s'étendant depuis la périphérie radialement externe de la partie avant 28. Un premier moyeu cylindrique 30 est situé en périphérie radialement interne de la partie avant 28. Le premier moyeu cylindrique 30 comporte des cannelures internes coopérant avec des cannelures externes d'un premier arbre de sortie de couple 31 ou premier arbre d'entrée d'une boîte de vitesses. Cet arbre 31 est par exemple associé aux rapports de vitesses impairs de la boîte de vitesses.

Des premiers contre-disques 32 sont couplés en rotation à la partie arrière 29 du premier support interne 27 et sont intercalés à chaque fois entre deux premiers disques 13, les premiers contre-disques 32 étant aptes à coulisser le long de ladite partie arrière 29. Chaque contre-disque 32 porte des garnitures de friction 33, comme cela est bien connu en soi.

Les premiers disques 13 et les premiers contre-disques 32 forment un premier mécanisme d'embrayage humide.

Le dispositif comporte en outre un second support interne 33 comprenant une partie avant annulaire 34 s'étendant radialement et une partie arrière cylindrique 35 s'étendant depuis la périphérie radialement externe de la partie avant 34. Un second moyeu cylindrique 36 est situé en périphérie radialement interne de la partie avant 34. Le second moyeu cylindrique 36 comporte des cannelures internes coopérant avec des cannelures externes d'un second arbre de sortie de couple 37 ou second arbre d'entrée d'une boîte de vitesses. Cet arbre 37 est par exemple associé aux rapports de vitesses pairs de la boîte de vitesses.

Les arbres de sortie de couple 31, 37 et le moyeu d'alimentation 14 sont coaxiaux, le second arbre de sortie de couple 37 étant monté à l'intérieur du moyeu d'alimentation 14, le premier arbre de sortie de couple 31 étant monté à l'intérieur du second arbre de sortie de couple 37.

Des seconds contre-disques 38 sont couplés en rotation à la partie arrière 35 du second support interne 33 et sont intercalés à chaque fois entre deux seconds disques 22, les seconds contre-disques 38 étant aptes à coulisser le long de ladite partie arrière 35. Chaque contre-disque 38 porte des garnitures de friction 39.

Les seconds disques 22 et les seconds contre-disques 39 forment un second mécanisme d'embrayage humide. Le second mécanisme d'embrayage est situé radialement à l'intérieur du premier mécanisme d'embrayage.

La partie avant 28 du premier support interne 27 est située axialement entre la partie radiale 4 de l'organe d'entrée de couple 2 et la partie avant 34 du second support interne 33. La partie avant 34 du second support interne 33 est située axialement entre la partie avant 28 du premier support interne 27 et l'extrémité avant du moyeu d'alimentation 14.

Un palier 40 est monté axialement entre l'organe d'entrée de couple 2 et le premier support interne 27. Un palier 41 est monté axialement entre le premier support interne 27 et le second support interne 33. Un palier 42 est monté axialement entre le second support interne 33 et le moyeu d'alimentation 14. Ces paliers 40, 41, 42 sont par exemple formés par des butées à aiguilles.

En outre, un palier 43 est monté radialement entre l'extrémité avant du premier arbre de sortie de couple 31 et la partie avant 3 de l'organe d'entrée de couple 2. Des paliers 44 sont en outre montés radialement entre le moyeu d'alimentation 14 et le second arbre 37. Ces paliers 43, 44 sont par exemple formés par des roulements à rouleaux.

Le dispositif d'embrayage 1 comporte également un premier piston 45, associé au premier mécanisme d'embrayage. Le premier piston 45 est monté axialement entre le premier support externe 8 et le second support externe 19. Le premier piston 45 comporte globalement deux zones 45a, 45b s'étendant radialement et décalée axialement l'une de l'autre, délimitant entre elles un épaulement cylindrique 45c. La périphérie radialement interne du premier piston 45 est équipée d'un joint à lèvre 46 en appui sur la surface externe du moyeu d'alimentation 14. Par ailleurs, le joint 17 est en appui sur la surface radialement interne de l'épaulement 45c du premier piston 45. Une première chambre de pression étanche 47 est ainsi délimitée par la zone 45b, l'épaulement 45c, le support de joint 15, la périphérie radialement interne du premier support externe 8 et le moyeu d'alimentation 14.

La périphérie radialement externe 45d du premier piston 45 est apte à venir en appui contre l'un des premiers disques 13. Le premier piston 45 est déplaçable axialement entre une position d'embrayage dans laquelle le premier piston 45 tend à plaquer les premier disques 13 sur les premier contre-disques 32 associés du premier mécanisme d'embrayage, et une position de débrayage dans laquelle le premier piston 45 tend à libérer les premier disques 13 et les premier contre-disques 32 du premier mécanisme d'embrayage.

Une première rondelle 48 est montée en avant du premier piston 45, ladite première rondelle 48 étant fixée sur la face arrière de la partie arrière 21 du second support externe 19, plus particulièrement dans la zone 21 a, ladite première rondelle 48 comportant une partie annulaire radiale avant 49, dont la périphérie radialement externe est prolongée axialement vers l'arrière par une partie arrière cylindrique 50, située radialement à l'intérieur de l'épaulement 21 c.

Un premier organe de rappel élastique, tel par exemple qu'une rondelle Belleville 51, est monté axialement entre la partie avant 49 de la première rondelle 48 et le premier piston 45. Le premier organe de rappel élastique 51 tend ainsi à rappeler le premier piston 45 vers sa position de débrayage. Le premier mécanisme d'embrayage est donc du type normalement ouvert.

Le joint à lèvre 46 porté par l'épaulement 45c du premier piston 45 vient en appui sur la partie cylindrique arrière 50 de la première rondelle 48. Une première chambre de contre-pression 52 est ainsi délimitée par la première rondelle 48, le premier piston 45, la périphérie radialement interne du second support externe 19 et le moyeu d'alimentation 14.

Par ailleurs, le dispositif d'embrayage comporte un second piston 53, associé au second mécanisme d'embrayage. Le second piston 53 est monté axialement entre le second support externe 19 et le second support interne 33. Comme précédemment, le second piston 53 porte un joint à lèvre 54 à sa périphérie interne, ledit joint 54 venant en appui sur le moyeu d'alimentation 14, et un joint à lèvre 55 au niveau d'un épaulement 53c, ledit joint 55 venant en appui sur une partie cylindrique d'une seconde rondelle 56. La seconde rondelle 56 est montée autour du moyeu d'alimentation 14 et est placée au contact de celui-ci. Un second organe de rappel élastique, tel par exemple qu'une rondelle Belleville 57, est monté entre la seconde rondelle 56 et le second piston 53.

Une seconde chambre de pression étanche 58 est délimitée par le second piston 53, le second porte-joint 23, la périphérie interne du second support externe 19 et le moyeu d'alimentation 14. Une seconde chambre de contre-pression 59 est délimitée par la seconde rondelle 56, le second piston 53 et le moyeu d'alimentation 14.

La périphérie radialement externe 53d du second piston 53 est apte à venir en appui contre l'un des seconds disques 22. Le second piston 53 est déplaçable axialement entre une position d'embrayage dans laquelle le second piston 53 tend à plaquer les seconds disques 22 sur les seconds contre-disques associés 38 du second mécanisme d'embrayage, et une position de débrayage dans laquelle le second piston 53 tend à libérer les seconds disques 22 et les seconds contre-disques 38 du second mécanisme d'embrayage.

Le moyeu d'alimentation 14 comporte trois canalisations 61 définissant deux circuits de fluide, à savoir un circuit de refroidissement, un circuit dit basse pression et un circuit dit haute pression. Les deux circuits de basse et de haute pression sont alimentés par des pompes correspondantes. L'une au moins desdits pompes à un organe d'entraînement 62 qui est fixé au moyeu 14, par exemple par soudage, directement en arrière du premier support externe 8.

Le circuit haute-pression débouche dans les première et seconde chambres de pression 47, 58 par des orifices référencés respectivement 63 et 64, tandis que le circuit basse-pression débouche dans les première et seconde chambres de contre-pression 52, 59 et dans le volume interne 9 logeant notamment les premier et second mécanismes d'embrayage, par des orifices référencés respectivement 65, 66 et 67.

En fonctionnement, du fluide sous haute-pression peut être amené soit vers la première chambre de pression 47, soit vers la seconde chambre de pression 58, de façon à déplacer respectivement le premier piston 45 ou le second piston 53 et actionner ainsi le premier mécanisme d'embrayage ou le second mécanisme d'embrayage.

Lors de l'embrayage du premier mécanisme d'embrayage, le couple entrant par l'organe d'entrée de couple 2 est transmis au premier arbre de sortie de couple 31 par l'intermédiaire du premier support externe 8, du premier mécanisme d'embrayage 13, 32 et du premier support interne 27.

Lors de l'embrayage du second mécanisme d'embrayage, le couple entrant par l'organe d'entrée de couple 2 est transmis au second arbre de sortie de couple par l'intermédiaire du premier support externe 8, du moyeu d'alimentation 14, du second support externe 19, du second mécanisme d'embrayage 22, 38 et du second support interne 33.

On notera que les deux mécanismes d'embrayage peuvent être actionnés simultanément au moment du changement du rapport de vitesse ou au moment de la transition de couple. Lorsque lesdites chambres de pression 47, 58 ne sont pas soumises à un fluide à haute-pression, alors les organes de rappel 51, 57 tendent à rappeler les pistons 45, 53 vers leurs positions de débrayage.

On s'intéressera dans ce qui suit au montage du moyeu 30 du premier support interne 27 sur le premier arbre 31.

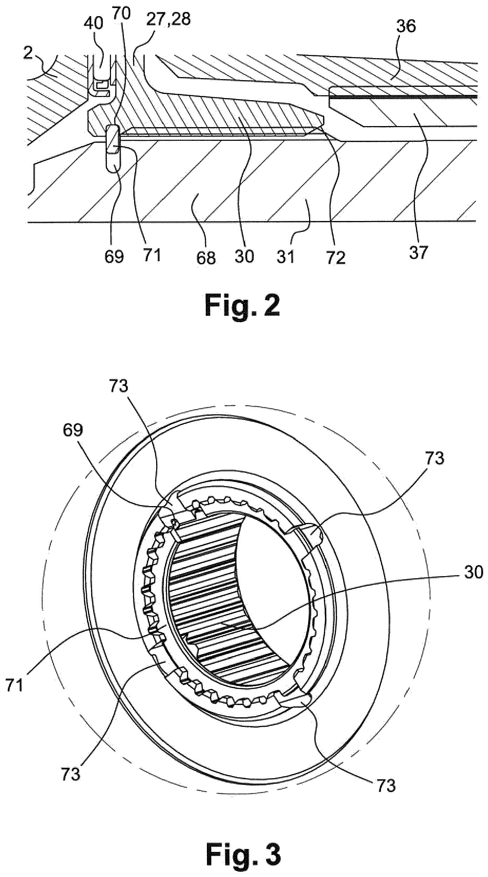

Comme cela est mieux visible à la figure 2, le premier arbre 30 comporte une zone avant cannelée 68 engagée dans le moyeu 30 du premier support interne 27 et coopérant avec les cannelures de celui-ci de manière à assurer un couplage en rotation du premier arbre 31 et du premier support interne 27. Le premier arbre 30 comporte de plus une gorge 69 débouchant radialement vers l'extérieur et située à proximité ou dans la zone cannelée 68. Le moyeu 30 du premier support interne 27 comporte également une gorge 70 débouchant radialement vers l'intérieur, située axialement en regard de la gorge 69. Un anneau élastique ou circlips 71 est monté à la fois dans la gorge 69 du premier arbre 31 et dans la gorge 70 du premier support interne 27, de manière à assurer le positionnement axial du premier support interne 27 sur le premier arbre 31.

L'extrémité arrière du moyeu 30 comporte un chanfrein 72 situé au niveau de la périphérie radialement interne dudit moyeu 30. Par ailleurs, comme illustré à la figure 3, le premier arbre 31 comporte des évidements 73 régulièrement répartis sur toute la circonférence, par exemple au nombre de quatre, lesdits évidements débouchant axialement vers l'avant et dans la gorge 69 du premier arbre 31, lesdits évidements 73 débouchant en outre radialement vers l'extérieur.

Un tel dispositif d'embrayage 1 peut être monté de la façon suivante.

L'ensemble formé notamment par l'organe d'entrée de couple 2, les supports externes 8, 19, les supports internes 27, 33, les mécanismes d'embrayage 13, 32 ; 22, 38, le moyeu d'alimentation 14, les pistons 45, 53, les rondelles 48, 56 et les organes de rappel élastiques 51, 57 peut être pré-monté. Cet ensemble est ensuite engagé sur la boîte de vitesses, en particulier sur les premier et seconds arbres 31, 37 de la boîte de vitesses. Lors de cet engagement, les zones cannelées des premiers et seconds arbres 31, 37 viennent s'engager dans les moyeux cannelés 30, 36 des premier et second supports internes 27, 33. En outre, l'anneau élastique 71 est déformé ou contraint dans une position déverrouillée dans laquelle il est logé uniquement dans la gorge 69 du premier arbre 31, par appui de la périphérie radialement externe dudit anneau élastique 71 sur le chanfrein 72 du moyeu 30 du premier support interne 27. Le coulissement axial du premier arbre 31 par rapport au moyeu cannelé correspondant 30 peut être poursuivi jusqu'à ce que les gorges 69, 70 soient situées axialement en regard l'une de l'autre. Dans cette position, l'anneau élastique 71 se déploie en position verrouillée, de façon à s'étendre à la fois dans la gorge 69 du premier arbre 31 et dans la gorge 70 du moyeu cannelé 30.

On notera qu'un tel montage ne nécessite pas de démontage, même partiel, de l'ensemble pré-monté précité.

A l'inverse, lorsque l'on souhaite démonter ledit ensemble des premiers et seconds arbres de sortie de couple 31, 37, il est nécessaire de démonter par exemple l'organe d'entrée de couple 2 afin qu'un opérateur puisse avoir accès à l'extrémité avant du premier arbre 31. Pour cela, le retrait de l'anneau élastique 11 permet de séparer l'organe d'entrée de couple 2 di premier support externe 8. Un outil peut alors être engagé axialement dans les évidements 73 du moyeu 30, de façon à contraindre l'anneau élastique 71 vers sa position déverrouillée, dans laquelle il est logé uniquement dans la gorge 69 du premier arbre 31. Il est alors possible de retirer l'ensemble précité, par coulissement vers l'arrière le long des premiers et seconds arbres de sortie de couple 31, 37.

L'invention propose ainsi un dispositif d'embrayage 1 de structure peu complexe, particulièrement facile à monter tout en pouvant être démonté dans certains cas particuliers. On notera cependant qu'un tel démontage n'intervient qu'exceptionnellement.

## Revendications

1. Dispositif d'embrayage (1) pour un véhicule automobile, comprenant des moyens d'entrée de couple (2) destinés à être couplés à un vilebrequin, un premier arbre de sortie de couple (31), un second arbre de sortie de couple (37), un premier mécanisme d'embrayage apte à coupler ou découpler les moyens d'entrée de couple (2) et le premier arbre de sortie de couple (31), un second mécanisme d'embrayage apte à coupler ou découpler les moyens d'entrée de couple (2) et le second arbre de sortie de couple (37), les premier et second mécanismes d'embrayage comportant respectivement des premiers et des seconds disques (13, 22) montés respectivement sur un premier et un second supports externes (8, 19) appartenant aux moyens d'entrée de couple, les premiers et seconds mécanismes d'embrayage comportant en outre respectivement des premiers et des seconds contre-disques (32, 38) montés respectivement sur un premier et un second supports internes (27, 33) couplés en rotation respectivement au premier et au second arbres de sortie de couple (31, 37), le premier support interne (27) et/ou le second support interne (33) comportant un moyeu radialement interne (30) monté autour de l'arbre de sortie de couple correspondant (31), ledit moyeu (30) et ledit arbre de sortie de couple correspondant (31) comportant des moyens de couplage en rotation complémentaires, tels par exemple que des cannelures complémentaires, et des moyens de positionnement axiaux dudit moyeu sur l'arbre de sortie de couple correspondant, **caractérisé en ce que** les moyens de positionnement axiaux comportent au moins une gorge (69) ménagée dans l'arbre de sortie de couple correspondant (31), au moins une gorge (70) ménagée dans ledit moyeu (30), et au moins un anneau élastique (71) apte à être déformé entre une position déverrouillée dans laquelle ledit anneau élastique est logé dans la gorge (69) de l'arbre de sortie de couple correspondant (31) de façon à permettre le montage du moyeu (30) autour dudit arbre de sortie correspondant (31), et une position verrouillée dans laquelle ledit anneau élastique (71) est logé à la fois dans la gorge (69) dudit arbre de sortie correspondant (31) et dans la gorge (70) dudit moyeu (30), de manière à immobiliser axialement le support interne correspondant (27) sur l'arbre de sortie correspondant (31).

2. Dispositif (1) selon la revendication 1, **caractérisé en ce que** le moyeu (30) comporte un chanfrein (72) ou un congé au niveau de l'une des extrémités axiales de sa périphérie radialement interne, l'anneau élastique (71) étant apte à être déplacé vers sa position déverrouillée lors du montage du moyeu (30) autour de l'arbre de sortie correspondant (31), par appui dudit anneau élastique (71) sur le chanfrein (72) ou le congé du moyeu (30).

3. Dispositif (1) selon la revendication 1 ou 2, **caractérisé en ce que** le moyeu (30) comporte au moins un évidement (73) s'étendant axialement, débouchant axialement dans la gorge (70) dudit moyeu (30).

4. Dispositif (1) selon l'une des revendications 1 à 3, **caractérisé en ce que** les deux arbres de sortie de couple (31, 37) sont coaxiaux, le premier arbre de sortie de couple (31) étant monté radialement à l'intérieur du second arbre de sortie de couple (37), le premier mécanisme d'embrayage (13, 32) étant situé radialement à l'extérieur du second mécanisme d'embrayage (22, 38).

5. Dispositif (1) selon l'une des revendications 1 à 4, **caractérisé en ce que** les premier et second mécanismes d'embrayage sont des mécanismes d'embrayage humides.

6. Dispositif (1) selon les revendications 4 et 5, **caractérisé en ce que** les moyens d'entrée de couple comportent un organe d'entrée de couple (2), couplé en rotation au premier support externe (8) et délimitant avec celui-ci un volume interne (9) dans lequel sont logés les premiers et seconds mécanismes d'embrayage et dans lequel un fluide est destiné à lubrifier et refroidir notamment lesdits mécanismes d'embrayage, les moyens d'entrée de couple comportant en outre un moyeu d'alimentation en fluide (14) couplé en rotation aux supports externes (8, 19), ledit moyeu d'alimentation (14) entourant le second arbre de sortie de couple (37), le premier support interne (27) étant situé axialement entre l'organe d'entrée de couple (2) et le second support interne (33), le second support interne (33) étant situé axialement entre le premier support interne (27) et le moyeu d'alimentation (14).

7. Dispositif (1) selon la revendication 6, **caractérisé en ce qu'**un premier palier (40) est monté axialement entre l'organe d'entrée de couple (2) et le premier support interne (27), un second palier (41) étant monté axialement entre le premier support interne (27) et le second support interne (33), un troisième palier (42) étant monté axialement entre le second support interne (33) et le moyeu d'alimentation (14), le moyeu d'alimentation (14) étant fixe axialement par rapport au premier support externe (8), lui-même fixe axialement par rapport à l'organe d'entrée de couple (2).

8. Dispositif (1) selon l'une des revendications 1 à 7, **caractérisé en ce que** chaque mécanisme d'embrayage est associé à un piston (45, 53) apte à être actionné entre une position d'embrayage dans laquelle ledit piston (45, 53) plaque les disques (13, 22) sur les contre-disques associés (32, 38) du mécanisme d'embrayage correspondant, et une position de débrayage dans laquelle ledit piston (45, 53) libère les disques (13, 22) et les contre-disques (32, 38) du mécanisme d'embrayage correspondant.

9. Dispositif (1) selon la revendication 8, **caractérisé en ce que** chaque piston (45, 53) est associé à une chambre de pression (47, 58) et une chambre de contre-pression (52, 59), chaque piston (45, 53) étant en outre soumis à un effort de rappel appliqué par un organe de rappel élastique, tel par exemple qu'une rondelle élastique (51, 57), tendant à rappeler le piston (45, 53) vers sa position débrayée.

10. Véhicule automobile comportant au moins un dispositif (1) selon l'une des revendications 1 à 9.

## Patentansprüche

1. Kupplungsvorrichtung (1) für ein Kraftfahrzeug, umfassend Drehmomenteingangsmittel (2), die dazu bestimmt sind, mit einer Kurbelwelle gekoppelt zu werden, eine erste Drehmomentausgangswelle (31), eine zweite Drehmomentausgangswelle (37), einen ersten Kupplungsmechanismus, der geeignet ist, die Drehmomenteingangsmittel (2) und die erste Drehmomentausgangswelle (31) zu koppeln oder zu entkoppeln, einen zweiten Kupplungsmechanismus, der geeignet ist, die Drehmomenteingangsmittel (2) und die zweite Drehmomentausgangswelle (37) zu koppeln oder zu entkoppeln, wobei der erste und der zweite Kupplungsmechanismus erste bzw. zweite Scheiben (13, 22) aufweisen, die auf einer ersten bzw. einer zweiten äußeren Halterung (8, 19) angebracht sind, die zu den Drehmomenteingangsmitteln gehört, wobei der erste und der zweite Kupplungsmechanismus außerdem erste bzw. zweite Gegenscheiben (32, 38) aufweisen, die auf einer ersten bzw. einer zweiten inneren Halterung (27, 33) angebracht sind, die mit der ersten bzw. mit der zweiten Drehmomentausgangswelle (31, 37) drehgekoppelt ist, wobei die erste innere Halterung (27) und/oder die zweite innere Halterung (33) eine radial innere Nabe (30) aufweist, die um die entsprechende Drehmomentausgangswelle (31) angebracht ist, wobei die Nabe (30) und die entsprechende Drehmomentausgangswelle (31) komplementäre Drehkopplungsmittel, wie zum Beispiel komplementäre Rillen, und Mittel zur axialen Positionierung der Nabe auf der entsprechenden Drehmomentausgangswelle aufweisen, **dadurch gekennzeichnet, dass** die Mittel zur axialen Positionierung umfassen: wenigstens eine Nut (69), die in der entsprechenden Drehmomentausgangswelle (31) ausgebildet ist, wenigstens eine Nut (70), die in der Nabe (30) ausgebildet ist, und wenigstens einen Federring (71), der geeignet ist, zwischen einer entriegelten Position, in welcher der Federring in der Nut (69) der entsprechenden Drehmomentausgangswelle (31) aufgenommen ist, um die Anbringung der Nabe (30) um die entsprechende Ausgangswelle (31) zu ermöglichen, und einer verriegelten Position, in welcher der Federring (71) gleichzeitig in der Nut (69) der entsprechenden Ausgangswelle (31) und in der Nut (70) der Nabe (30) aufgenommen ist, um die entsprechende innere Halterung (27) auf der entsprechenden Ausgangswelle (31) axial zu arretieren, verformt zu werden.

2. Vorrichtung (1) nach Anspruch 1, **dadurch gekennzeichnet, dass** die Nabe (30) an einem der axialen Enden ihres radial inneren Umfangs eine Fase (72) oder eine Auskehlung aufweist, wobei der Federring (71) geeignet ist, bei der Anbringung der Nabe (30) um die entsprechende Ausgangswelle (31) durch Abstützung des Federrings (71) auf der Fase (72) oder der Auskehlung der Nabe (30) zu seiner entriegelten Position hin verlagert zu werden.

3. Vorrichtung (1) nach Anspruch 1 oder 2, **dadurch gekennzeichnet, dass** die Nabe (30) wenigstens eine sich axial erstreckende Aussparung (73) aufweist, die axial in die Nut (70) der Nabe (30) mündet.

4. Vorrichtung (1) nach einem der Ansprüche 1 bis 3, **dadurch gekennzeichnet, dass** die zwei Drehmomentausgangswellen (31, 37) koaxial sind, wobei die erste Drehmomentausgangswelle (31) radial innerhalb der zweiten Drehmomentausgangswelle (37) angebracht ist, wobei sich der erste Kupplungsmechanismus (13, 32) radial außerhalb des zweiten Kupplungsmechanismus (22, 38) befindet.

5. Vorrichtung (1) nach einem der Ansprüche 1 bis 4, **dadurch gekennzeichnet, dass** der erste und der zweite Kupplungsmechanismus Nasskupplungsmechanismen sind.

6. Vorrichtung (1) nach den Ansprüchen 4 und 5, **dadurch gekennzeichnet, dass** die Drehmomenteingangsmittel ein Drehmomenteingangsorgan (2) umfassen, das mit der ersten äußeren Halterung (8) drehgekoppelt ist und mit dieser ein Innenvolumen (9) begrenzt, in welchem der erste und der zweite Kupplungsmechanismus aufgenommen sind und in welchem ein Fluid dazu bestimmt ist, insbesondere die Kupplungsmechanismen zu schmieren und zu kühlen, wobei die Drehmomenteingangsmittel außerdem eine Fluidzufuhrnabe (14) umfassen, die mit den äußeren Halterungen (8, 19) drehgekoppelt ist, wobei die Zufuhrnabe (14) die zweite Drehmomentausgangswelle (37) umgibt, wobei sich die erste innere Halterung (27) axial zwischen dem Drehmomenteingangsorgan (2) und der zweiten inneren Halterung (33) befindet, wobei sich die zweite innere Halterung (33) axial zwischen der ersten inneren Halterung (27) und der Zufuhrnabe (14) befindet.

7. Vorrichtung (1) nach Anspruch 6, **dadurch gekennzeichnet, dass** ein erstes Lager (40) axial zwischen dem Drehmomenteingangsorgan (2) und der ersten inneren Halterung (27) angebracht ist, wobei ein zweites Lager (41) axial zwischen der ersten inneren Halterung (27) und der zweiten inneren Halterung (33) angebracht ist, wobei ein drittes Lager (42) axial zwischen der zweiten inneren Halterung (33) und der Zufuhrnabe (14) angebracht ist, wobei die Zufuhrnabe (14) axial bezüglich der ersten äußeren Halterung (8) fixiert ist, die ihrerseits axial bezüglich des Drehmomenteingangsorgans (2) fixiert ist.

8. Vorrichtung (1) nach einem der Ansprüche 1 bis 7, **dadurch gekennzeichnet, dass** jeder Kupplungsmechanismus einem Kolben (45, 53) zugeordnet ist, der geeignet ist, zwischen einer Einrückposition, in welcher der Kolben (45, 53) die Scheiben (13, 22) an die zugehörigen Gegenscheiben (32, 38) des entsprechenden Kupplungsmechanismus andrückt, und einer Ausrückposition, in welcher der Kolben (45, 53) die Scheiben (13, 22) und die Gegenscheiben (32, 38) des entsprechenden Kupplungsmechanismus freigibt, betätigt zu werden.

9. Vorrichtung (1) nach Anspruch 8, **dadurch gekennzeichnet, dass** jeder Kolben (45, 53) einer Druckkammer (47, 58) und einer Gegendruckkammer (52, 59) zugeordnet ist, wobei jeder Kolben (45, 53) außerdem einer Rückholkraft ausgesetzt ist, die von einem elastischen Rückholorgan, wie zum Beispiel einem Federring (51, 57), ausgeübt wird, das bestrebt ist, den Kolben (45, 53) in seine ausgerückte Position zurückzuholen.

10. Kraftfahrzeug, welches wenigstens eine Vorrichtung (1) nach einem der Ansprüche 1 bis 9 umfasst.

## Claims

1. Clutch device (1) for a motor vehicle, comprising torque input means (2) intended to be coupled to a crank shaft, a first torque output shaft (31), a second torque output shaft (37), a first clutch mechanism able to couple or uncouple the torque input means (2) and the first torque output shaft (31), a second clutch mechanism able to couple or uncouple the torque input means (2) and the second torque output shaft (37), the first and second clutch mechanisms respectively comprising first and second discs (13, 22) mounted respectively on a first and a second external support (8, 19) belonging to the torque input means, the first and second clutch mechanisms furthermore respectively comprising first and second counter discs (32, 38) mounted respectively on a first and a second internal support (27, 33) rotationally coupled respectively to the first and second torque output shafts (31, 37), the first internal support (27) and/or the second internal support (33) comprising a radially internal hub (30) mounted around the corresponding torque output shaft (31), the said hub (30) and the said corresponding torque output shaft (31) comprising complementary rotational-coupling means, such as, for example, complementary splines, and means for axially positioning the said hub on the corresponding torque output shaft, **characterized in that** the axial positioning means comprise at least one groove (69) formed in the corresponding torque output shaft (31), at least one groove (70) formed in the said hub (30) and at least one elastic ring (71) that can be deformed between an unlocked position in which the said elastic ring is housed in the groove (69) of the corresponding torque output shaft (31) in such a way as to allow the hub (30) to be mounted around the said corresponding output shaft (31), and a locked position in which the said elastic ring (71) is housed both in the groove (69) of the said corresponding output shaft (31) and in the groove (70) of the said hub (30) so as to axially immobilise the corresponding internal support (27) on the corresponding output shaft (31).

2. Device (1) according to Claim 1, **characterized in that** the hub (30) comprises a chamfer (72) or an undercut at one of the axial ends of its radially internal periphery, the elastic ring (71) being able to be moved towards its unlocked position as the hub (30) is mounted around the corresponding output shaft (31), by means of pressure of the said elastic ring (71) against the chamfer (72) or the undercut of the hub (30).

3. Device (1) according to Claim 1 or 2, **characterized in that** the hub (30) comprises at least one axially extending recess (73) opening axially into the groove (70) of the said hub (30).

4. Device (1) according to one of Claims 1 to 3, **characterized in that** the two torque output shafts (31, 37) are coaxial, the first torque output shaft (31) being mounted radially inside the second torque output shaft (37), the first clutch mechanism (13, 32) being situated radially on the outside of the second clutch mechanism (22, 38).

5. Device (1) according to one of Claims 1 to 4, **characterized in that** the first and second clutch mechanisms are wet clutch mechanisms.

6. Device (1) according to Claims 4 and 5, **characterized in that** the torque input means comprise a torque input member (2) rotationally coupled to the first external support (8) and therewith delimiting an internal volume (9) in which the first and second clutch mechanisms are housed and in which a fluid is intended to lubricate and cool notably the said clutch mechanisms, the torque input means further comprising a fluid supply hub (14) rotationally coupled to the external supports (8, 19), the said supply hub (14) surrounding the second torque output shaft (37), the first internal support (27) being situated axially between the torque input member (2) and the second internal support (33), the second internal support (33) being situated axially between the first internal support (27) and the supply hub (14).

7. Device (1) according to Claim 6, **characterized in that** a first bearing (40) is mounted axially between the torque input member (2) and the first internal support (27), a second bearing (41) being mounted axially between the first internal support (27) and the second internal support (33), a third bearing (42) being mounted axially between the second internal support (33) and the supply hub (14), the supply hub (14) being axially fixed with respect to the first external support (8) which is itself axially fixed with respect to the torque input member (2).

8. Device (1) according to one of Claims 1 to 7, **characterized in that** each clutch mechanism is associated with a piston (45, 53) that can be actuated between a clutch engagement position in which the said piston (45, 53) presses the discs (13, 22) firmly against the associated counter discs (32, 38) of the corresponding clutch mechanism, and a clutch release position in which the said piston (45, 53) releases the discs (13, 22) and the counter discs (32, 38) of the corresponding clutch mechanism.

9. Device (1) according to Claim 8, **characterized in that** each piston (45, 53) is associated with a pressure chamber (47, 58) and with a counter pressure chamber (52, 59), each piston (45, 53) also being subjected to a return force applied by an elastic return member, such as a spring washer (51, 57) for example, that tends to return the piston (45, 53) towards its clutch release position.

10. Motor vehicle comprising at least one device (1) according to one of Claims 1 to 9.
